# EUROPEAN PATENT SPECIFICATION

(11) **EP 0 464 158 B1**
(45) Date of publication and mention of the grant of the patent: **07.06.1995**
(21) Application number: 90911110.6
(22) Date of filing: 28.06.1990
(51) Int. Cl.: B64C 3/14, B64C 11/18, B64C 3/58, F04D 29/38

(54) **LIGHTWEIGHT AIRFOIL**
LEICHTE SCHAUFEL
AUBAGE AERODYNAMIQUE

(30) Priority: 30.06.1989 US 374302
(43) Date of publication of application: 08.01.1992
(73) Proprietor: AIRFLOW RESEARCH & MANUFACTURING CORP., Watertown, MA 02172 (US)
(72) Inventor: GREENWALD, C., Kent, Cambridge, MA 02139 (US); GRAY, Leslie, M., Lincoln, MA 01773 (US); READ, Russel, B., Maynard, MA 01754 (US); STEVENS, William, Belmont, MA 02178 (US)
(74) Representative: Rackham, Anthony Charles
(86) International application number: US9003698
(87) International publication number: WO9100212

(56) References cited:
- DE-C- 320 775
- DE-C- 323 762
- DE-C- 348 054
- GB-A- 17 935
- GB-A- 0 159 207
- US-A- 1 206 058
- US-A- 3 077 173

## Description

This invention relates to airfoils, and particularly to airfoils used in fans.

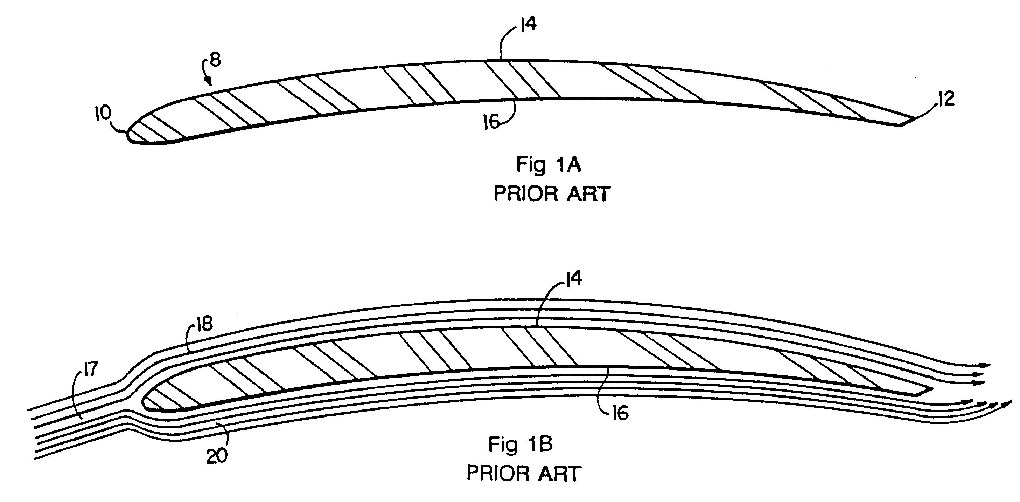

Figure 1A of the accompanying drawings illustrates a typical prior art airfoil 8 in cross-section having a leading edge 10, a trailing edge 12, and substantially parallel surfaces 14 and 16. As shown in Figure 1B of the accompanying drawings which shows air flowing over the airfoil, when the airfoil 8 contacts a stream of air 17, the air stream engages the leading edge 10, and separates into streams 18 and 20. Stream 18 passes along the surface 14 while stream 20 passes along the surface 16. As is well known, stream 18 travels a greater distance than stream 20, with the result that air adjacent to the surface 16 is at a higher pressure than air adjacent to the surface 14. Consequently, surface 16 is referred to as the "pressure side" of the airfoil, and surface 14 is referred to as the "suction side" of the airfoil.

Noise is generated by airfoils due to pressure fluctuations in the air passing over each of the airfoil surfaces. The noise level can be reduced by increasing the thickness of the airfoil. However, the weight of the airfoil increases as it becomes thicker thereby increasing manufacturing costs and decreasing performance.

German Patents 348 054 and 323 762 and British Patent 159 207 show various forms of airfoil having a pressure surface and a suction surface. These pressure surfaces have gradual or curved changes in the slope of their pressure surfaces but such changes are not designed to cause the air stream flowing from the leading edge towards the trailing edge to separate from the pressure surface and then re-attach to the pressure surface further along it.

German Patent 320 775 shows an airfoil with a hollowed pressure surface covered with an elastic membrane covered with bumps designed to disrupt the airflow over that membrane and cause turbulence. The air stream is not shown as detaching from the pressure surface and then re-attaching to the pressure surface further along it but is instead shown as detaching and thereafter being turbulent flows.

United States Patent 3 077 173 shows a number of hydrofoils. Some have pressure surfaces and suction surfaces of differing lengths but there is no disclosure suggesting that the water flow should detach from the pressure surface.

According to the invention we provide an airfoil comprising a suction surface and a pressure surface, the surfaces being joined together at leading and trailing edges of the airfoil, the airfoil being characterised in that the pressure surface in a direction from the leading edge to the trailing edge initially diverges from the suction surface and then abruptly converges toward the suction surface by an angle approximately equal to or greater than 30° to form a corner on the pressure surface, and in that there is an abrupt change in the slope of the pressure surface at the said corner effective in operation to cause an air stream flowing from the leading edge over the pressure surface to separate from the pressure surface at the said corner and re-attach to the pressure surface at a section of the pressure surface substantially closer to said trailing edge.

Since air flowing over the pressure surface separates at the corner where the pressure surface diverges towards the suction surface, the flow of air over the airfoil will be substantially the same as the flow of air over a much thicker airfoil whose pressure surface does not diverge. However, since the thickness of the airfoil of the present invention is substantially reduced over most of its chord length, it is substantially lighter than thicker prior art airfoils exhibiting the same flow characteristics. The airfoil of the present invention therefore achieves the advantages of a thick airfoil, e.g., reduced noise, but is much lighter than prior art thick airfoils, thereby reducing manufacturing costs and increasing efficiency.

In preferred embodiments, the said corner is located a distance from the leading portion equal to between 5% and 10% of the overall chord length of the airfoil, the thickness of the airfoil is substantially constant for a portion of the airfoil between the said corner and the trailing edge, and the thickness of a first portion of the airfoil where the pressure surface initially diverges from the suction surface between the leading edge and the said corner is approximately twice the thickness of a second portion of the airfoil between the said corner and the trailing edge.

Also it is preferred to provide at least one guide rib on a portion of the pressure surface downstream of the said corner from which the stream is separated in operation, thereby to control the flow boundary layer air on the said portion of the pressure surface. The guide rib may be approximately parallel to a line extending from the leading edge to the trailing edge and a substantially, rectangular projection on the pressure surface. The guide rib may extend along the pressure surface from the corner toward the trailing edge. At least two, and preferably two guide ribs are provided.

The invention will now be described with reference to the accompanying drawings, in which:
Fig. 2A is a cross-sectional view of an airfoil in accordance with the present invention;
Fig. 2B illustrates air flowing over the airfoil of Fig. 2A; and
Fig. 3 is an enlarged view of a section of the airfoil shown in Fig. 2A; and
Fig. 4 is a perspective view of a section of the airfoil shown in Figure 2A.

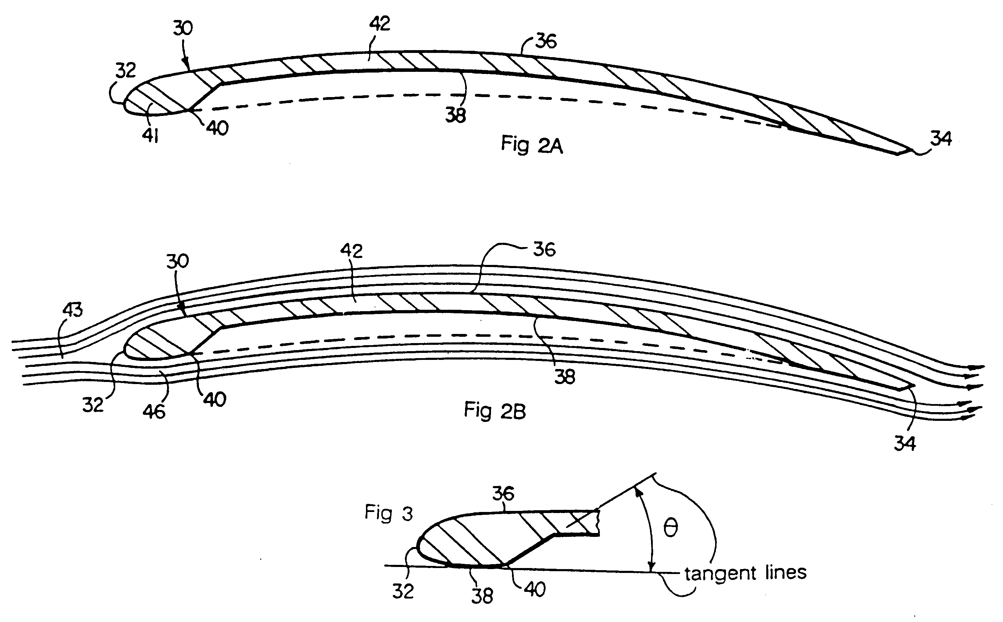

Referring to Fig. 2A, airfoil 30 comprises leading edge 32, trailing edge 34, and substantially parallel surfaces 36 and 38, surface 36 being a suction surface and surface 38 being a pressure surface. Surface 38 includes a sharp corner 40, such that surface 38 diverges or bends towards surface 36, thereby creating a thick "nose section" 41 and a reduced thickness portion 42. The distance between corner 40 and leading edge 32 is between 5% and 10% of the chord length of the airfoil. The dashed line in Fig. 2A illustrates a pressure surface of a typical prior art airfoil (see Fig. 1).

Fig. 2B illustrates the flow of air over airfoil 30. A stream of air 43 intersects airfoil 30 at leading edge 32, and separates into streams 44 and 46. Stream 44 flows along surface 36. Stream 46, however, will not flow along surface 38, but will separate from surface 38 at corner 40. Stream 46 will actually follow a path that is very similar to the path followed by stream 20 in Fig. 1B. Therefore, airfoil 30 has substantially the same flow characteristics as the airfoil illustrated in Fig. 1.

In order to ensure that stream 46 separates from surface 38, the angle at which pressure surface 38 diverges at corner 40 must be greater than a threshold angle. If the bend is too gradual, stream 46 will turn at corner 40 and remain close to surface 38, resulting in increased loading and noise. Referring to Fig. 3, in the preferred embodiment corner 40 bends at an angle ϑ of at least 30°. Angle ϑ is measured between lines tangent to surface 38 on each side of corner 40.

While the vast majority of stream 46 will follow the path shown in Fig. 2B, there will be some air that flows next to the portion of surface 38 along reduced thickness portion 42. This "boundary layer" flow may travel along surface 38 in a direction other than toward trailing edge 34. This travel of the boundary layer can interfere with fan performance by, e.g., disrupting the external flow.

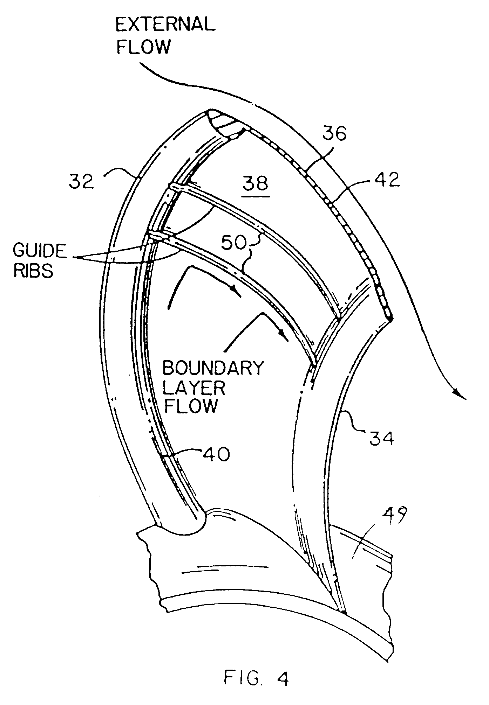

Referring to Fig. 4, a perspective view of a section of airfoil 30 is shown attached to a section of a hub 49, which supports several airfoils (not shown). Two guide ribs 50 extend from surface 38 accross reduced thickness portion 42 from corner 40 toward trailing edge 34. Guide ribs 50 will redirect boundary layer flow of air toward trailing edge 34 such that the boundary layer flow will not interfere with the external flow. Several guide ribs may be placed throughout the length of airfoil 30.

## Claims

1. An airfoil (30) comprising a suction surface (36) and a pressure surface (38), the surfaces being joined together at leading and trailing edges (32,34) of the airfoil (30), the airfoil (30) being characterised in that the pressure surface (38) in a direction from the leading edge (32) to the trailing edge (34) initially diverges from the suction surface (36) and then abruptly converges toward the suction surface (36) by an angle approximately equal to or greater than 30° to form a corner (40) on the pressure surface (38), and in that there is an abrupt change in the slope of the pressure surface (38) at the said corner (40) effective in operation to cause an air stream flowing from the leading edge (32) over the pressure surface (38) to separate from the pressure surface (38) at the said corner (40) and re-attach to the pressure surface (38) at a section of the pressure surface (38) substantially closer to the trailing edge (34).

2. An airfoil according to Claim 1 further characterised in that the said corner (40) is located a distance from the leading edge (32) equal to between 5% and 10% of the chord length of the airfoil (30).

3. An airfoil according to Claim 1 or Claim 2 further characterised in that the thickness of the airfoil (30) is substantially constant for a portion of the airfoil between the said corner (40) and the trailing edge (34).

4. An airfoil according any preceding claim further characterised in that the thickness of a first portion (41) of the airfoil (30) where the pressure surface (38) initially diverges from the suction surface (36) between the leading edge (32) and the said corner (40) is approximately twice the thickness of a second portion (42) of the airfoil (30) between the said corner (40) and the trailing edge (34).

5. An airfoil according to any preceding claim in which the pressure surface (38) has at least one guide rib (50) on a portion of the pressure surface (38) downstream of the said corner (40) from which the stream is separated in operation, thereby to control the flow boundary layer air on the said portion of the pressure surface (38).

6. An airfoil according to Claim 5 further characterised in that the guide rib (50) is a substantially rectangular projection on the pressure surface (38).

7. An airfoil according to Claim 5 or Claim 6 further characterised in that the guide rib (50) is approximately parallel to a line extending from the leading edge (32) to the trailing edge (34).

8. An airfoil according to any of claims 5 to 7 further characterised in including at least two guide ribs (50).

9. An airfoil according to any of claims 5 to 8 further characterised in that the guide rib (50) extends along the pressure surface (38) from the said corner (40) toward the trailing edge (34).

## Patentansprüche

1. Flügelblatt (30), bestehend aus einer Saugfläche (36) und einer Druckfläche (38), wobei diese Flächen an der Vorderkante (32) und an der Hinterkante (34) des Flügelblatts (30) miteinander verbunden sind, und das Flügelblatt (30) dadurch gekennzeichnet ist, daß sich die Druckfläche (38) in Richtung Vorderkante (32) zur Hinterkante (34) zunächst von der Saugfläche (36) entfernt und anschließend abrupt mit einem ungefähren Winkel von mindestens 30° wieder der Saugfläche (36) annähert und somit eine Ecke (40) auf der Druckfläche (38) entsteht; daß es in dieser Ecke (40) eine abrupte Änderung in der Neigung der Druckfläche (38) gibt, wobei die Ecke (40) beim Einsatz bewirkt, daß eine von der Vorderkante (32) kommende und über die Druckfläche (38) verlaufende Luftströmung sich an dieser Ecke (40) von der Druckfläche (38) trennt und in einem Abschnitt der Druckfläche (38) wieder auf die Druckfläche (38) auftrifft, der wesentlich näher zur Hinterkante (34) liegt.

2. Flügelblatt entsprechend Anspruch 1, des weiteren dadurch gekennzeichnet, daß sich die erwähnte Ecke (40) in einer Entfernung von der Vorderkante (32) befindet, die zwischen 5 % und 10 % der gesamten Flügeltiefe des Flügelblatts (30) liegt.

3. Flügelblatt entsprechend Anspruch 1 oder Anspruch 2, des weiteren dadurch gekennzeichnet, daß die Stärke des Flügelblatts (30) in dem Abschnitt zwischen der Ecke (40) und der Hinterkante (34) im wesentlichen konstant ist.

4. Flügelblatt entsprechend allen bisherigen Ansprüchen, des weiteren dadurch gekennzeichnet, daß die Stärke des ersten Abschnitts (41) des Flügelblatts (30), in dem sich die Druckfläche (38) zunächst von der Saugfläche (36) entfernt, zwischen der Vorderkante (32) und der Ecke (40) etwa doppelt so groß ist wie die Stärke des zweiten Abschnitts (42) zwischen der Ecke (40) und der Hinterkante (34).

5. Flügelblatt entsprechend allen bisherigen Ansprüchen, dessen Druckfläche (38) mindestens eine Führungsrippe (50) in einem Abschnitt der Druckfläche (38), aufweist, der in Strömungsrichtung hinter der Ecke (40), von welcher im Betrieb die Strömung getrennt wird, liegt, wodurch die Luftströmung an der Grenzfläche dieses Abschnitts der Druckfläche (38) gesteuert wird.

6. Flügelblatt entsprechend Anspruch 5, des weiteren dadurch gekennzeichnet, daß die Führungsrippe (50) im wesentlichen im rechten Winkel auf der Druckfläche (38) verläuft.

7. Flügelblatt entsprechend Anspruch 5 oder Anspruch 6, des weiteren dadurch gekennzeichnet, daß die Führungsrippe (50) etwa parallel zu einer Linie verläuft, die sich von der Vorderkante (32) zur Hinterkante (43) erstreckt.

8. Flügelblatt entsprechend den Ansprüchen 5 bis 7, des weiteren dadurch gekennzeichnet, daß mindestens zwei Führungsrippen (50) eingesetzt werden.

9. Flügelblatt entsprechend den Ansprüchen 5 bis 8, des weiteren dadurch gekennzeichnet, daß die Führungsrippe (50) entlang der Druckfläche (38) von der Ecke (40) zur Hinterkante (34) verläuft.

## Revendications

1. Plan aérodynamique (30) comprenant une surface en dépression (36) et une surface en pression (38), les surfaces se rejoignant aux bords d'attaque et de fuite (32, 34) du plan aérodynamique (30), le plan aérodynamique (30) étant caractérisé en ce que, dans le sens allant du bord d'attaque (32) au bord de fuite (34), la surface en pression (38) diverge initialement de la surface en dépression (36) puis converge brusquement vers la surface en dépression (36), selon un angle à peu près égal ou supérieur à 30°, pour former une arête (40) sur la surface en pression (38) et en ce qu'il y a, au droit de ladite arête (40), un changement brusque de la pente de la surface en pression (38) qui, en fonctionnement, entre en jeu pour contraindre une veine d'air qui s'écoule sur la surface en pression (38) en provenance du bord d'attaque (32) à se décoller de la surface en pression (38) au droit de ladite arête (40) et à se refixer à la surface en pression (38) dans une zone de la surface en pression (38) qui est nettement plus rapprochée dudit bord de fuite (34).

2. Plan aérodynamique selon la revendication 1, caractérisé en outre en ce que ladite arête (40) est située à une distance du bord d'attaque (32) d'entre 5 % et 10 % de la longueur de la corde du plan aérodynamique (30).

3. Plan aérodynamique selon la revendication 1 ou la revendication 2, caractérisé en outre en ce que l'épaisseur du plan aérodynamique (30) est sensiblement constante sur une partie du plan aérodynamique située entre ladite arête (40) et le bord de fuite (34).

4. Plan aérodynamique selon une quelconque des revendications précédentes, caractérisé en outre en ce que l'épaisseur d'une première partie (41) du plan aérodynamique (30), à l'endroit où la surface en pression (38) diverge initialement de la surface en dépression (36) entre le bord d'attaque (32) et ladite arête (40), est approximativement le double de l'épaisseur d'une deuxième partie (42) du plan aérodynamique (30) située entre ladite arête (40) et le bord de fuite (34).

5. Plan aérodynamique selon une quelconque des revendications précédentes, dans lequel la surface en pression (38) possède au moins une nervure de guidage (50) sur une partie de la surface en pression (38) située en aval de ladite arête (40) d'où la veine se détache en fonctionnement, pour maîtriser ainsi l'air de la couche limite d'écoulement sur ladite partie de la surface en pression (38).

6. Plan aérodynamique selon la revendication 5, caractérisé en outre en ce que la nervure de guidage (50) est une saillie sensiblement rectangulaire sur la surface en pression (38).

7. Plan aérodynamique selon la revendication 5 ou la revendication 6, caractérisé en outre en ce que la nervure de guidage (50) est approximativement parallèle à une ligne s'étendant du bord d'attaque (32) au bord de fuite (34).

8. Plan aérodynamique selon une quelconque des revendications 5 à 7, caractérisé en outre en ce qu'il comprend au moins deux nervures de guidage (50).

9. Plan aérodynamique selon une quelconque des revendications 5 à 8, caractérisé en outre en ce que la nervure de guidage (50) s'étend le long de la surface en pression (38) depuis ladite arête (40) vers le bord de fuite (34).
